# EUROPEAN PATENT APPLICATION

(11) **EP 2 408 184 A1**
(43) Date of publication of application: **18.01.2012**
(21) Application number: 10750340.1
(22) Date of filing: 03.03.2010
(51) Int. Cl.: H04M 3/51

(54) **METHOD AND SYSTEM FOR VOICE SERVICE**

(30) Priority: 12.03.2009 CN 200910004494
(71) Applicant: Huawei Technologies Co., Ltd., Shenzhen, Guangdong 518129 (CN)
(72) Inventor: BAI, Weining, Guangdong 518129 (CN)
(74) Representative: Barth, Stephan Manuel
(86) International application number: PCT/CN2010/070855
(87) International publication number: WO 2010/102544

(57) **Abstract**

A method and system for a voice service are disclosed in the present invention. The voice service method includes: when detecting a voice service requested by a user, obtaining a voice identifier of the voice service, where the voice identifier indicates an operation object of the voice service; determining the operation object of the voice service according to the voice service and the voice identifier of the voice service; and performing the voice service requested by the user according to the determined operation object of the voice service. The voice service system includes a computer-telephony integration (CTI) platform and a soft automatic call distribution (SoftACD). With embodiments of the present invention, a voice identifier is set in a voice service, so that an operation object may be identified when the voice service is performed and the voice service function may be extended.

## Description

This application claims priority to Chinese Patent Application No. 200910004494.X, filed with the Chinese Patent Office on March 12, 2009 and entitled "METHOD AND SYSTEM FOR VOICE SERVICE", which is incorporated herein by reference in its entirety.

### FIELD OF THE INVENTION

The present invention relates to the communication field, and in particular, to a method and a system for a voice service.

### BACKGROUND

The Computer Supported Telecommunications Applications (CSTA) protocol describes a communication protocol between a computing domain and a switching domain. With the support of the CSTA protocol, a computer-telephony integration (CTI) platform in the computing domain may flexibly control a Soft Automatic Call Distribution (SoftACD) in the switching domain according to the CSTA protocol, thus implementing various combined services (including manual service and automatic voice service) to satisfy customers' requirements.

In actual practices, as the customers' requirements are diversified, the customers have higher requirements for applications of the service scenarios. For example, a scenario of the voice service is shown as follows: The president of a company wants to call the owners of each subsidiary to hold a teleconference, and the secretary of the president submits a teleconference request to the call center of a carrier providing teleconference services. The CTI platform of the call center creates a multiparty conference on the SoftACD according to the CSTA protocol; when the conference time arrives, the president of the company and the owners of the subsidiaries establish calls with the SoftACD system through the network; the SoftACD system transfers them to the requested conference to start the teleconference. In current SoftACD applications, after multiple users establishing calls with the SoftACD system are transferred to the conference, a conference announcement may be played as a conference prelude. When playing the conference announcement, all users at the conference can only listen to the announcement but cannot talk with each other. The users can talk with each other only after the conference announcement is finished. This conference announcement in the prior art is known as a common conference announcement. The difference between the common conference announcement and the conference background voice is as follows: When the common conference announcement is played, the users cannot talk with each other; when the conference background voice is played, the users can talk with each other.

During the implementation of the present invention, the inventor finds the following problem in the prior art:

In current SoftACD applications, when a user requests a voice service from the system, for example, when the user requests Playing a Voice Service or Recording a Voice Service, the system cannot determine whether the announcement to be played is a common conference announcement or a conference background voice. In addition, the system cannot determine whether the recordexMessage is to record call voices or a mix of the conference background voice and call voices. Therefore, the service experience of the user is affected.

### SUMMARY OF THE INVENTION

To extend the voice service function, embodiments of the present invention provide a method for a voice service. The voice service method includes:
when detecting a voice service requested by a user, obtaining a voice identifier of the voice service, where the voice identifier indicates an operation object of the voice service;
determining the operation object of the voice service according to the voice service and the voice identifier of the voice service; and
performing the voice service requested by the user for the determined operation object of the voice service.

A system for a voice service includes:
a CTI platform, configured to: receive event information indicating that a user requests a voice service, determine the voice service requested by the user according to the event information, and deliver the voice service to a SoftACD; and
the SoftACD, configured to: receive the voice service delivered by the CTI platform, and obtain a voice identifier of the voice service, where the voice identifier indicates an operation object of the voice service; determine the operation object of the voice service according to the voice service and the voice identifier of the voice service, and perform the voice service requested by the user for the determined operation object of the voice service.

The technical solution provided in embodiments of the present invention brings the following benefits:
A voice identifier is set in the voice service, so that an operation object may be identified when the voice service is performed, and the voice service function may be extended.

### BRIEF DESCRIPTION OF THE DRAWINGS

FIG. 1 is a flowchart of a method for a voice service according to a first embodiment of the present invention;
FIG. 2 is a schematic structural diagram of a system for a voice service according to the first embodiment of the present invention; and
FIG. 3 is a scenario diagram of a system for a voice service according to the first embodiment of the present invention.

### DETAILED DESCRIPTION OF THE EMBODIMENTS

To make the objectives, technical solution, and merits of the present invention clearer, the embodiments of the present invention are described in detail in the following with reference to the accompanying drawings.

### Embodiment 1

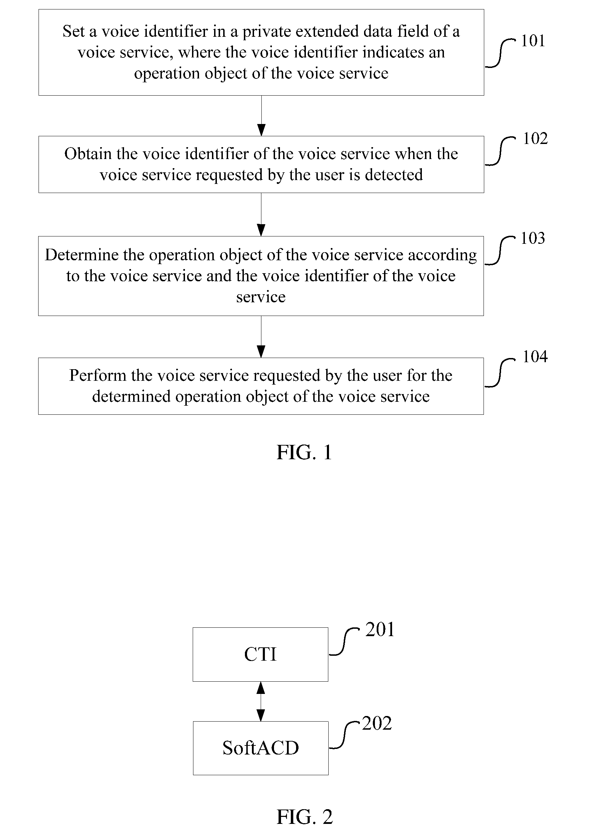

As shown in FIG. 1, to flexibly provide a voice service for a user in the process of implementing standard CSTA services, for example, in the process of a teleconference, a method for a voice service is provided in this embodiment. As shown in FIG. 1, the method includes the following steps:
Step 101: Set a voice identifier in a private extended data field of a voice service. The voice identifier indicates an operation object of the voice service.

The private extended data is a structure field in a reserved common parameter of each service in the CSTA protocol. These structure fields are predefined to extend the service function.

After a voice identifier is set in a private extended data field of a voice service, an operation object of the voice service may be identified. For example, a value of the voice identifier may identify whether a played music file is used as a common conference announcement or a conference background voice. When a 1-bit voice identifier is used, it may be specified as follows: when the value of the voice identifier is 0, a common conference announcement is played; when the value of the voice identifier is 1, a conference background voice is played. A SoftACD system may determine an operation object of the current voice service according to the voice identifier.

In actual practices, a voice service includes Playing a Voice Service, Stopping Playing a Voice Service, Recording a Voice Service, Stopping Recording a Voice Service, and Setting Voice Attributes Service. The Setting Voice Attributes Service includes tuning music volume and adjusting a music playing speed.

When a voice service requested by a user is Playing a Voice Service, Stopping Playing a Voice Service, or Setting Voice Attributes Service, if a voice identifier indicates a common conference announcement, an operation object of the voice service is the common conference announcement, that is, the user may request to play or stop playing the common conference announcement or to adjust the volume of the common conference announcement; if a voice identifier indicates a conference background voice, an operation object of the voice service is the conference background voice, that is, the user may request to play or stop playing the music that is played as the conference background voice or to adjust the volume of the conference background voice. When the conference background voice is played, users at the conference may still hear the voices of each other. This is implemented by an existing function of the voice resource device inside the SoftACD.

When a voice service requested by a user is Recording a Voice Service, or Stopping Recording a Voice Service, and no conference background voice is played at the conference, a common conference announcement may be played or users are talking with each other at the conference. Under this circumstance, only the voices of users or only the common conference announcement is recorded. The voices of users are call voices at the conference. When a voice service requested by a user is Recording a Voice Service, or Stopping Recording a Voice Service, and a conference background voice is being played at the conference, if a voice identifier indicates the conference background voice, an operation object of the voice service is a mix of the voices of users and conference background voice. Under this circumstance, a recorded conference voice is the mix of the voices of users and conference background voice. If a voice identifier of the Recording a Voice Service is not the identifier of the conference background voice, an operation object of the voice service is the voices of users. Under this circumstance, a recorded conference voice is only the voices of users, including no conference background voice.

Step 102: Obtain the voice identifier of the voice service when the voice service requested by the user is detected.

Specifically, in this embodiment of the present invention, a conference system that provides voice services includes a CTI platform and a SoftACD. After a user requests a voice service, for example, when a user requests a SoftACD to play a selected conference background voice by pressing a button, the SoftACD platform reports received event information of playing the conference background voice to a CTI platform; the CTI platform delivers Playing a Voice Service to the SoftACD according to a mapping relation between the event information and the service menu; after receiving the Playing a Voice Service delivered by the CTI platform, the softACD obtains a voice identifier in the Playing a Voice Service to perform a next processing.

Step 103: Determine the operation object of the voice service according to the voice service requested by the user and the voice identifier of the voice service.

Specifically, after the voice identifier is obtained, the operation object of the current voice service may be determined according to the voice service and the voice identifier. For example, in step 101, it is already specified that bit1=1 of a voice identifier in Playing a Voice Service identifies a conference background voice. When the voice identifier is detected as bit1=1, the operation object of the current voice service may be determined as the conference background voice.

Step 104: Perform the voice service requested by the user for the determined operation object of the voice service.

Specifically, according to the definition in step 101, when a voice service is Playing a Voice Service, Stopping Playing a Voice Service, or Setting Voice Attributes Service,, the voice service requested by the user is performed for the determined common conference announcement or the conference background voice.

When a voice service is Recording a Voice Service, or Stopping Recording a Voice Service,, if an operation object of the voice service is a mix of a conference background voice and voices of users, Recording a Voice Service, or Stopping Recording a Voice Service, is performed for the mix; if an operation object of the voice service is voices of users, Recording a Voice Service, or Stopping Recording a Voice Service, is performed for the voices of users.

In this embodiment, a voice identifier is set in a private extended data field of a voice service, so that an operation object may be identified when the voice service is performed. In this way, operations such as playing or recording a conference background voice may be supported, thus extending the voice service function.

A method for a voice service is provided in another embodiment. The method includes steps that are similar to the preceding step 101 to step 104 except for the following difference: In this embodiment, examples of a specific structure of a voice service message are provided. Specifically, the message structure corresponding to the voice service is as follows: for Playing a Voice Service: PlayAndCollect;
for Recording a Voice Service: recordexMessage;
for Stopping Playing a Voice Service/Stopping Recording a Voice Service: Stop;
for Setting Voice Attributes Service: SetVoiceAttribute.

More specifically, a message structure of Playing a Voice Service is as follows:

```
          PlayAndCollectArgument ::= SEQUENCE
          {
               overConnection ConnectionID,
               playCollectInfo PlayAndCollectInfo,
               extensions CSTACommonArgumentsOPTIONAL
          }
          CSTACommonArguments ::= [APPLICATION 30] IMPLICIT SEQUENCE
          {
               privateData [1] IMPLICIT SEQUENCE OF CSTAPrivateData OPTIONAL
          }
          CSTAPrivateData ::= SEQUENCE
          {
               handleFlag [3] IMPLICIT BIT STRING(SIZE(1..8)) OPTIONAL
          --bit1: indicates that a voice identifier of Playing a Voice Service is
 an identifier of a conference background voice;
          --bit2: indicates that a voice identifier of Stopping Playing a Voice
 Service/Stopping Recording a Voice Service is an identifier of a conference background
 voice;
          --bit3: indicates that a voice identifier of Recording a Voice Service is an identifier
 of a conference background voice;
          --bit6: indicates that a voice identifier of a Setting Voice Attributes Service is an
 identifier of a conference background voice.
          }
```

In the message structure of the Playing a Voice Service, handleFlag refers to a structure field in a reserved common parameter of a voice service, and may be used as a voice identifier of the Playing a Voice Service. In this embodiment, the length of handleFlag is 8 bits. Bit1 may be used to identify whether a common conference announcement or a conference background voice is played by the Playing a Voice Service. For example, it is specified that a common conference announcement is played when bit1=0, and a conference background voice is played when bit1=1. Obviously, other bits such as bit 4 or bit 5 in the 8 bits may be also used to identify an operation object of the Playing a Voice Service.

A message structure of Recording a Voice Service is as follows:

```
          RecordexMessageArgument ::= SEQUENCE
          {
            callToBeRecorded ConnectionID, -- A connection ID used to identify
 equipment and calls related to the service
            messagetToBeRecorded MessageID(size(1..128)), -- A file name of the record
            format [0]IMPLICIT ENUMERATED - A format of the record
                                  {line Wave (4),
                                  aLawWave (5),
                                  oIVOX32K (6),
                                  oIVOX24K(7)} OPTIONAL,
            maxDuration [1]IMPLICIT INTEGER(1..3600) OPTIONAL,
            termination [2]IMPLICIT TrminatingConditiongs OPTIONAL,
            endKeys [3] IMPLICIT OCTET STRING(SIZE(1..2)) OPTIONAL,
             extensions CSTACommonArguments OPTIONAL
          }
          CSTACommonArguments ::= [APPLICATION 30] IMPLICIT SEQUENCE
          {
               privateData [1] IMPLICIT SEQUENCE OF CSTAPrivateData OPTIONAL
          }
          CSTAPrivateData ::= SEQUENCE
          {
               handleFlag [3] IMPLICIT BIT STRING(SIZE(1..8)) OPTIONAL
          --bit1: indicates that a voice identifier of Playing a Voice Service is an
 identifier of a conference background voice;
          --bit2: indicates that a voice identifier of Stopping Playing a Voice
 Service/Stopping Recording a Voice Service is an identifier of a conference background
 voice;
          --bit3: indicates that a voice identifier of Recording a Voice Service is an identifier
 of a conference background voice;
          --bit6: indicates that a voice identifier of Setting Voice Attributes Service is an
 identifier of a conference background voice.
          }
```

In the message structure of the Recording a Voice Service, when the Recording a Voice Service is performed, if no conference background voice is played at the conference, voices of users or a common conference announcement is recorded.

When the Recording a Voice Service is performed, if a conference background voice is being played at the conference and a voice identifier of the Recording a Voice Service is an identifier of the conference background voice, that is, bit3=1, the recorded voice is a mix of voices of users and the conference background voice. If the voice identifier of the Recording a Voice Service is not the identifier of the conference background voice, that is, bit3=0, the recorded voice includes only call voices at the conference, with no conference background voice.

A message structure of Stopping Playing a Voice Service/Stopping Recording a Voice Service is as follows:

```
          StopArgument ::= SEQUENCE
          {
               connection ConnectionID,
               mesage MessageID OPTIONAL,
               extensions CSTACommonArgumentsOPTIONAL
          }
          CSTACommonArguments ::= [APPLICATION 30] IMPLICIT SEQUENCE
          {
               privateData [1] IMPLICIT SEQUENCE OF CSTAPrivateData OPTIONAL
          }
          CSTAPrivateData ::= SEQUENCE
          {
               handleFlag [3] IMPLICIT BIT STRING(SIZE(1..8)) OPTIONAL
          --bit1: indicates that a voice identifier of Playing a Voice Service is an
  identifier of a conference background voice;
          --bit2: indicates that a voice identifier of Stopping Playing a Voice
 Service/Stopping Recording a Voice Service is an identifier of a conference background
 voice;
          --bit3: indicates that a voice identifier of Recording a Voice Service is an identifier
 of a conference background voice;
          --bit6: indicates that a voice identifier of Setting Voice Attributes Service is an
 identifier of a conference background voice.
          }
```

A message structure of Setting Voice Attributes Service is as follows:

```
          SetVoiceAttributeArgument ::= SEQUENCE
          {
               connection ConnectionID,
               attributeToSet CHOICE
               {
                    speed [0] IMPLICIT Speed, //Playing speed
                    speakerVolume [1] IMPLICIT INTEGER (0 .. 100), //Voice volume
                    recordingLevel [2] IMPLICIT INTEGER (0 .. 100) //Recorded voice
 volume
               },
               message MessageID OPTIONAL,
               extensions CSTACommonArguments OPTIONAL
          }
          CSTACommonArguments ::= [APPLICATION 30] IMPLICIT SEQUENCE
          {
               privateData [1] IMPLICIT SEQUENCE OF CSTAPrivateData OPTIONAL
          }
          CSTAPrivateData ::= SEQUENCE
          {
               handleFlag [3] IMPLICIT BIT STRING(SIZE(1..8)) OPTIONAL
          --bit1: indicates that a voice identifier of Playing a Voice Service is an
  identifier of a conference background voice;
          --bit2: indicates that a voice identifier of Stopping Playing a Voice
 Service/Stopping Recording a Voice Service is an identifier of a conference background
 voice;
          --bit3: indicates that a voice identifier of Recording a Voice Service is an identifier
 of a conference background voice;
          --bit6: indicates that a voice identifier of Setting Voice Attributes Service is an
 identifier of a conference background voice.
          }
```

After an identifier of a conference background voice is set, if the SoftACD parses the identifier when processing a voice service, the SoftACD may determine an operation object of the current voice service and perform related processing accordingly so that the voice service can be flexibly combined.

As shown in FIG. 2, this embodiment further provides a system for a voice service. The voice service system may carry out the method shown in FIG. 1. The system includes:
a CTI201, configured to: receive event information indicating that a user requests a voice service, determine the voice service requested by the user according to the event information, and deliver the voice service to a SoftACD202; and
the SoftACD202, configured to: receive a voice service delivered by the CTI201, and obtain a voice identifier of the voice service, where the voice identifier indicates an operation object of the voice service; determine the operation object of the voice service according to the user request, the voice service, and the voice identifier of the voice service, and perform the voice service requested by the user for the determined operation object of the voice service.

The voice identifier is an identifier set in a private extended data field of a voice service. The voice service includes Recording a Voice Service, Stopping Recording a Voice Service, Playing a Voice Service, Stopping Playing a Voice Service, and Setting Voice Attributes Service.

Take a scenario where the voice service system is used for a teleconference as an example. In this scenario, the SoftACD202 includes:
a determining module, configured to: when the voice service is Playing a Voice Service, Stopping Playing a Voice service, and Setting Voice Attributes Service, if the voice identifier is an identifier of a conference background voice, determine that an operation object of the voice service is the conference background voice ; if the voice identifier is an identifier of a common conference announcement, determine that an operation object of the voice service is the common conference announcement; and
a performing module, configured to perform the voice service requested by the user for the determined operation object of the voice service.

Furthermore, the determining module of the SoftACD202 is configured to: when the voice service is Recording a Voice Service and Stopping Recording a Voice service, and a conference background voice is being played at the conference, if the voice identifier is an identifier of the conference background voice, determine that an operation object of the voice service is a mix of the conference background voice and voices of users; if the voice identifier is not an identifier of the conference background voice, determine that an operation object of the voice service is voices of users.

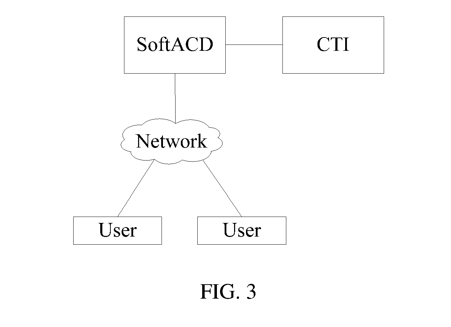

Specifically, as shown in FIG. 3, a scenario of the system is illustrated in this embodiment. The process of performing a teleconference in the system is as follows:

After a user requests a teleconference, a CTI201 creates a multiparty conference according to the number of participants; each user establishes a call with a SoftACD202 through a next generation network (NGN); the system transfers the users to the conference created by the CTI201. Supposing user A is the controlling party of the conference, user A may select a desired conference background voice according to a service selection menu. After user A selects a background voice by pressing the key, the SoftACD202 reports an event of playing a conference background voice to the CTI201; the CTI201 platform delivers a corresponding Playing a Voice Service to the SoftACD202 according to a mapping relation between the event information and the service menu. After receiving the Playing a Voice Service, the SoftACD202 obtains a voice identifier of the voice service, and determines that an operation object of the voice service is the conference background voice according to the voice identifier. In this way, the music selected by the user is played as the conference background voice in the system.

Accordingly, when user A performs operations of Stopping Playing a Voice, Recording a Voice or Setting Voice Attributes, the CTI201 and the SoftACD202 may process according to a method similar to the preceding method. The method is not further described.

In this embodiment, a voice identifier is set in a private extended data field of a voice service, so that an operation object may be identified when the voice service is performed. In this way, operations such as playing or recording a conference background voice may be further supported, thus extending the voice service function.

It is understandable to those skilled in the art that all or part of the processes in the preceding embodiments may be implemented by related hardware instructed by a program. The program may be stored in a computer readable storage medium. When the program runs, the processes of the preceding embodiments are implemented. The storage medium may be a magnetic disk, a compact disk-read only memory (CD-ROM), a read only memory (ROM) or a random access memory (RAM).

The preceding descriptions are merely exemplary embodiments of the present invention, but not intended to limit the scope of the present invention. Any modification, or replacement made without departing from the spirit and principle of the present invention shall fall within the scope of the present invention. Therefore, the protection scope of the present invention is subject to the appended claims.

## Claims

1. A method for a voice service, comprising:
when detecting a voice service requested by a user, obtaining a voice identifier of the voice service, wherein the voice identifier indicates an operation object of the voice service;
determining the operation object of the voice service according to the voice service and the voice identifier of the voice service; and
performing the voice service requested by the user for the determined operation object of the voice service.

2. The method of claim 1, wherein the step of determining the operation object of the voice service according to the voice service and the voice identifier of the voice service comprises:
when the voice service is Playing a Voice Service, Stopping Playing a Voice Service, or Setting Voice Attributes Service, if the voice identifier is an identifier of a conference background voice, determining that the operation object of the voice service is the conference background voice; and if the voice identifier is an identifier of a common conference announcement, determining that the operation object of the voice service is the common conference announcement.

3. The method of claim 1, wherein the step of determining the operation object of the voice service according to the voice service and the voice identifier of the voice service comprises:
when the voice service is Recording a Voice Service or Stopping Recording a Voice Service, and a conference background voice is being played at a conference, if the voice identifier is an identifier of the conference background voice, determining that the operation object of the voice service is a mix of the conference background voice and voices of users; and if the voice identifier is not an identifier of the conference background voice, determining that the operation object of the voice service is the voices of users.

4. The method of claim 1, wherein the voice identifier is an identifier set in a private extended data field of a voice service.

5. A system for a voice service, comprising:
a computer-telephony integration (CTI) platform, configured to: receive event information indicating that a user requests a voice service, determine a voice service requested by a user according to the event information, and deliver the voice service to a soft automatic call distribution (SoftACD); and
the SoftACD, configured to: receive a voice service delivered from the CTI platform, and obtain a voice identifier of the voice service, wherein the voice identifier indicates an operation object of the voice service; determine the operation object of the voice service according to the voice service and voice identifier of the voice service, and perform the voice service requested by the user for the determined operation object of the voice service.

6. The system of claim 5, wherein the SoftACD comprises:
a determining module, configured to: when the voice service is Playing a Voice Service, Stopping Playing a Voice Service, or Setting Voice Attributes Service, if the voice identifier is an identifier of a conference background voice, determine that an operation object of the voice service is the conference background voice; if the voice identifier is an identifier of a common conference announcement, determine that an operation object of the voice service is the common conference announcement; and
a performing module, configured to perform the voice service requested by the user for the operation object of the voice service determined by the determining module.

7. The system of claim 6, wherein:
the determining module is further configured to: when the voice service is Recording a Voice Service or Stopping Recording a Voice Service, and a conference background voice is being played at a conference, if the voice identifier is an identifier of the conference background voice, determine that an operation object of the voice service is a mix of the conference background voice and voices of users; if the voice identifier is not an identifier of the conference background voice, determine that an operation object of the voice service is the voices of users.

8. The system of claim 5, wherein the voice identifier is an identifier set in a private extended data field of a voice service.
